# EUROPÄISCHE PATENTSCHRIFT

(11) **EP 1 039 191 B1**
(45) Veröffentlichungstag und Bekanntmachung des Hinweises auf die Patenterteilung: **24.09.2003**
(21) Anmeldenummer: 00105713.2
(22) Anmeldetag: 17.03.2000
(51) Int. Cl.: F16K 27/04, F16K 11/078

(54) **Ventilkartuschenanordnung**
Valve cartridge arrangement
Agencement de cartouche de robinet

(30) Priorität: 24.03.1999 DE 19913214
(43) Veröffentlichungstag der Anmeldung: 27.09.2000
(73) Patentinhaber: Friedrich Grohe AG & Co. KG, 58675 Hemer (DE)
(72) Erfinder: Pawelzik, Manfred, 59494 Soest (DE); Gebhardt, Wolfgang, 58706 Menden (DE); Hannemann, Fred, 04916 Herzberg (DE)

(56) Entgegenhaltungen:
- EP-A- 0 809 056
- EP-A- 0 893 634
- DE-A- 19 510 670
- DE-A- 19 602 161
- DE-A- 19 610 620
- US-A- 4 697 620

## Beschreibung

Die Erfindung betrifft ein Ventil, insbesondere Eingriffmischventil, enthaltend einen Armaturenkörper und eine als Baueinheit ausgebildete mit dem Armaturenkörper verbindbare Ventilkartusche mit wenigstens zwei aufeinanderliegenden, zueinander verschiebbaren Scheiben als Ventilorgan, wobei wenigstens eine der Scheiben eine oder mehrere Durchtrittsöffnungen aufweist und die Scheiben zusammen mit den zugehörigen Dicht- und Gleitelementen in einem aus einem Boden oder einer ortsfest gehaltenen Scheibe und einer Hülse gebildeten, eine Öffnung für ein Ventilstellglied und Zu- und Abflussöffnungen enthaltenden Gehäuse angeordnet sind, wobei die Hülse mit einer zu den Anschlussdichtungen im Boden oder an der ortsfest gehaltenen Scheibe abgekehrten, nacharbeitbaren Stirnseite versehen ist.

Eine derartige Ventilkartuschenanordnung ist aus der deutschen Offenlegungsschrift DE 196 10 620 A1 bekannt. Hierbei wird zur Verhinderung eines unerwünschten Verspannens die einmontierte Ventilkartusche von einer Schraubhülse zu einer Stirnfläche am Armaturenkörper gehalten.

Der Erfindung liegt die Aufgabe zugrunde, eine alternative Ventilkartuschenanordnung vorzuschlagen, bei der ebenfalls ein unerwünschtes Verformen der Ventilkartusche bei der Einmontage in den Armaturenkörper ausgeschlossen wird.

Diese Aufgabe wird erfindungsgemäß dadurch gelöst, dass im Armaturenkörper eine Aufnahmekammer für die Ventilkartusche ausgebildet ist, in oder an deren Öffnung eine Gewinderingmutter bis zur Anlage auf einer Kammerschulter ein- oder aufdrehbar ist, wobei in der Montagestellung eine Stirnfläche der Gewinderingmutter sowohl an der Kammerschulter als auch an der nachgearbeiteten Stirnseite der Ventilkartusche anliegt, und der Abstand der Anlagefläche der Kammerschulter zur Auflagefläche der Anschlussdichtungen im Armaturenkörper so bemessen ist, dass die erforderliche Vorspannung der Ventilelemente erfolgt. Weitere Ausgestaltungen der Erfindung sind in den Ansprüchen 2 bis 10 angegeben.

Ausführungsbeispiele der Erfindung sind in der Zeichnung dargestellt und werden im folgenden näher beschrieben. Es zeigt
- Figur 1: ein im Längsschnitt dargestelltes Einhebelmischventil;
- Figur 2: einen Teil eines anderen Einhebelmischventils im Längsschnitt;
- Figur 3: einen Teil eines weiteren Einhebelmischventils im Längsschnitt;
- Figur 4: einen Teil einer anderen Ventilkartusche mit einer aufsteckbaren Scheibe, teilweise im Längsschnitt;
- Figur 5: die in Figur 4 gezeigte Ventilkartusche in Draufsicht;
- Figur 6: eine Gewinderingmutter im Längsschnitt für eine Verspannung der in Figur 4 und 5 gezeigten Ventilkartusche;
- Figur 7: die in Figur 6 gezeigte Gewinderingmutter in Draufsicht;
- Figur 8: die in Figur 2 gezeigte Gewinderingmutter im Längsschnitt in vergrößerter Darstellung;
- Figur 9: die in Figur 8 gezeigte Gewinderingmutter in Draufsicht;
- Figur 10: die in Figur 3 gezeigte Gewinderingmutter im Längsschnitt in vergrößerter Darstellung;
- Figur 11: die in Figur 10 gezeigte Gewinderingmutter in Draufsicht.

Der Einfachheit halber sind bei den Ausfübrungsbeispielen in der Zeichnung gleiche oder entsprechende Elemente mit jeweils gleichen Bezugszeichen versehen.

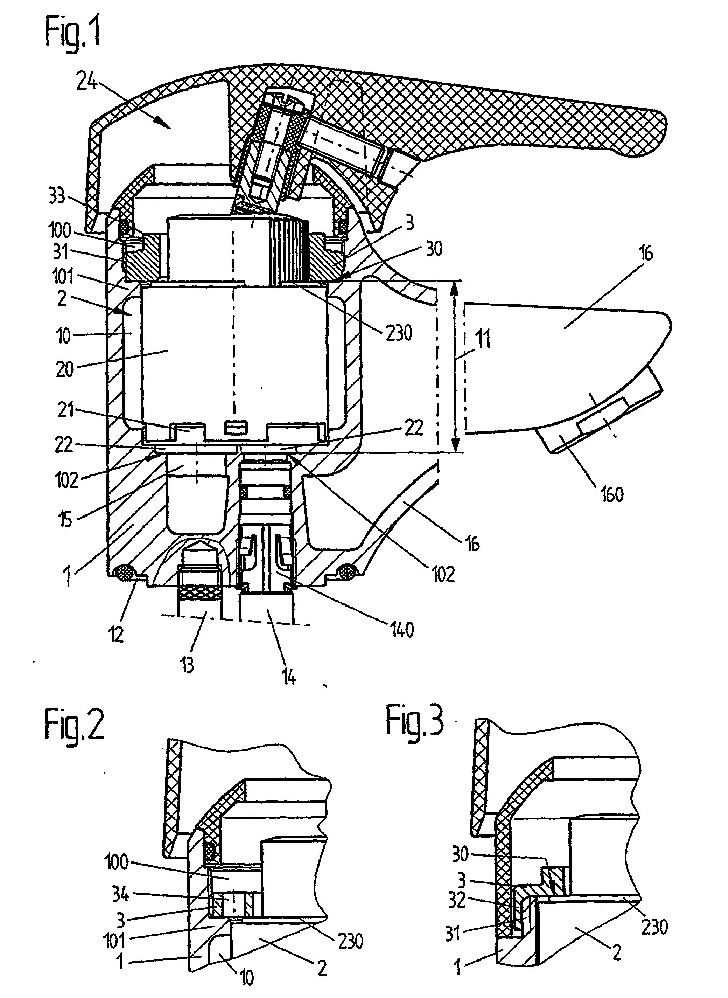

Bei dem in Figur 1 gezeigten Einhebelmischventil ist in einem Armaturenkörper 1 eine Ventilkartusche 2 in einer Aufnahmekammer 10 angeordnet. Der Armaturenkörper 1 wird hierbei mit einer Stirnfläche 12 an der Oberfläche eines Wasch- und/oder Spültisches aufgesetzt, wobei mit einer bekannten Spannvorrichtung 13 durch eine Öffnung in dem Wasch- und/oder Spültisch der Armaturenkörper 1 befestigt wird. Parallel zur Spannvorrichtung 13 werden Anschlussleitungen 14 für Kaltwasser und Warmwasser jeweils mit einer bekannten Kupplung 140 mit dem Armaturenkörper 1 verbunden. In der Zeichnung ist lediglich eine Anschlussleitung 14 dargestellt, die zweite Anschlussleitung befindet sich hinter der Zeichenebene. Stromabwärts hinter den Anschlussleitungen 14 wird das Kaltwasser und das Warmwasser von getrennten Kanälen im Armaturenkörper 1 aufgenommen, die jeweils in einer Auflagefläche 102 münden.
Die in der Aufnahmekammer 10 angeordnete Ventilkartusche 2 ist aus einer Hülse 20 und einem Boden 21 gebildet und kapselt eine ortsfest gehaltene Ventilsitzscheibe und eine mit einem Stellhebel 24 in zwei Freiheitsgraden bewegbare Steuerscheibe, wobei in der Ventilsitzscheibe jeweils eine separate Einlassöffnung für das zufließende Kaltwasser und Warmwasser sowie eine weitere Mischwasser-Auslassöffnung ausgebildet ist. Die drei Öffnungen in der Ventilsitzscheibe können von der beweglichen Steuerscheibe mit Hilfe eines Überströmkanals mehr oder weniger in Überdeckung gebracht werden, so dass in einem ersten Freiheitsgrad die Gesamtdurchflussmenge und in einem zweiten Freiheitsgrad das Mischungsverhältnis von Kalt- und Warmwasser einstellbar ist.
Im Boden 21 der Ventilkartusche 2 sind separate Öffnungen für das zufließende Kalt- und Warmwasser sowie das abfließende Mischwasser ausgebildet, wobei in den Öffnungen schlauchförmige Anschlussdichtungen 22 eingelagert sind, die einerseits mit ihrer Stirnseite an der Ventilsitzscheibe und andererseits jeweils an der Auflagefläche 102 im Grund der Aufnahmekammer 10 des Armaturenkörpers 1 anliegen. Das in der Ventilkartusche 2 erzeugte Mischwasser wird über einen Kanal 15 in den Auslaufarm 16 des Armaturenkörpers 1 abgegeben, wonach es als Freistrahl aus einem Auslaufmundstück 160 austritt.

Die Ventilkartusche 2 wird in der Aufnahmekammer 10 von einer Gewinderingmutter 3 gehalten. Hierbei ist an dem vom Boden 21 abgekehrten Endbereich der Hülse 20 eine Ringschulter ausgebildet, auf der eine ringförmige Rippe 230 axial vorsteht. Bei der Zusammenmontage der Ventilkartusche 2 wird ein Scheibenpaket mit den Dichtund Gleitelementen in die Hülse 20 eingefügt, worauf die Hülse 20 mit dem Boden 21, in dem die Anschlussdichtungen 22 angeordnet sind, verschlossen wird. Hiernach wird die Länge der Ventilkartusche 2 durch einen Abschmelzvorgang an der Rippe 230 auf ein vorgegebenes Maß gebracht, so dass alle entsprechend behandelten Ventilkartuschen 2 die gleiche Länge aufweisen, unabhängig von den einzelnen Fertigungstoleranzen der in der Ventilkartusche 2 gekapselten Ventilelemente.

In der Aufnahmekammer 10 ist zu den Auflageflächen 102 für die Anschlussdichtungen 22 mit Abstand 11 eine Kammerschulter 101 ausgebildet, an der die Gewinderingmutter 3 mit einer Stirnfläche 30 in der Einschraubposition zur Anlage gelangt. In dieser Einschraubposition liegt gleichzeitig an dieser Stirnfläche 30 der Gewinderingmutter 3 die Rippe 230 der Hülse 20 der Ventilkartusche 2 an. Die Gewinderingmutter 3 kann hierbei über eine Öffnung 100 in die Aufnahmekammer 10 eingebracht und mit einem am Außenmantel ausgebildeten Gewinde 31 in ein entsprechendes Gewinde der Öffnung 100 eingeschraubt werden. An der der Stirnfläche 30 abgekehrten Seite der Gewinderingmutter 3 ist ein Sechskant 33 ausgebildet, an dem ein Drehwerkzeug angesetzt werden kann.
Beim Einschraubvorgang der Gewinderingmutter 3 kann diese daher lediglich soweit in die Aufnahmekammer 10 eingedreht werden, bis die Stirnfläche 30 an der Kammerschulter 101 aufsitzt. Ein weiteres Eindrehen ist ohne Zerstörung der Gewinderingmutter 3 nicht möglich. Andererseits ist durch den Abstand 11 der Kammerschulter 101 von der Auflagefläche 102 der Anschlussdichtungen 22 im Grund der Aufnahmekammer 10 sichergestellt, dass die Ventilkartusche 2 keinen Deformationen ausgesetzt ist, sondern lediglich mit der nötigen Vorspannung über die Anschlussdichtungen 22 auf die Auflageflächen 102 gedrückt wird. Sowohl die erforderliche Leichtgängigkeit der Ventilelemente in der Ventilkartusche 2 als auch die Dichtigkeit der Ventilkartusche 2 ist somit gewährleistet. In der Praxis hat sich als sinnvoll erwiesen, wenn zwischen dem Boden 21 der Ventilkartusche 2 und dem Boden der Aufnahmekammer 10 ein Spiel von etwa 0,0 mm bis 0,6 mm, vorzugsweise 0,05 mm bis 0,2 mm, vorhanden ist.

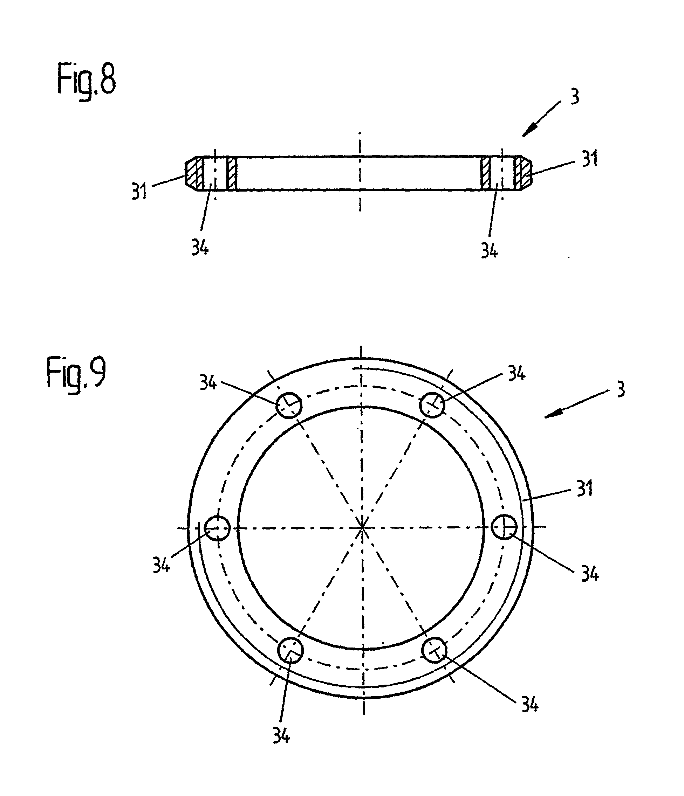

In Figur 2 ist ein zur Figur 1 abgewandeltes Ausführungsbeispiel dargestellt. Die Gewinderingmutter 3 weist hierbei keinen Sechskant auf. Stattdessen sind in dieser Gewinderingmutter 3 auf einem Lochkreis Bohrungen 34 angeordnet, wie es insbesondere auch aus Figur 8 und 9 der Zeichnung zu entnehmen ist. Die Bohrungen 34 dienen hierbei für den Ansatz eines Drehwerkzeugs.

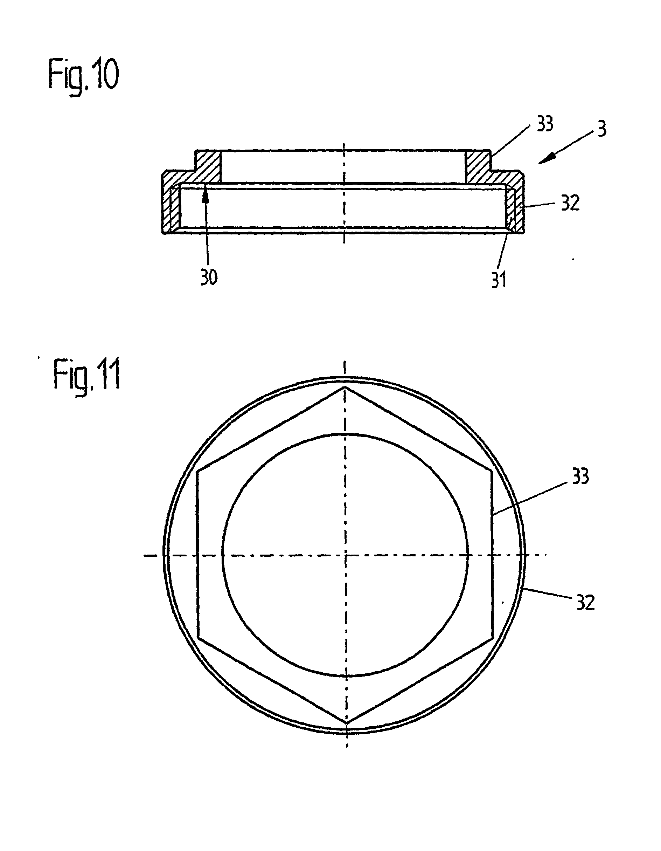

Bei dem in Figur 3 dargestellten Teil eines Einhebelmischventils ist eine weitere Ausführungsmöglichkeit einer Gewinderingmutter 3 dargestellt. Wie es insbesondere aus Figur 10 und 11 zu entnehmen ist, weist hierbei die Gewinderingmutter 3 eine innere Stirnfläche 30 auf, an der sowohl die Kammerschulter 101 als auch die Rippe 230 der Hülse 20 in der Einschraubposition anliegen. An der Stirnfläche 30 schließt sich ein im Durchmesser erweiterter Ansatz 32 an, in dessen Innenwandung ein Gewinde 31 ausgebildet ist. Am Armaturenkörper 1 ist konzentrisch zur Aufnahmekammer 10 am Außenmantel ein entsprechendes Gewinde vorgesehen, so dass die Gewinderingmutter 3 mit ihrem Ansatz 32 auf das Gewinde am Armaturenkörper 1 aufgeschraubt werden kann, bis die Stirnfläche 30 an der Kammerschulter 101 zur Anlage gelangt. An der dem Ansatz 32 gegenüberliegenden Endbereich ist als Polygonprofil ein Sechskant 33 ausgebildet, an dem ein Drehwerkzeug zum Ansatz gebracht werden kann. Alternativ können hierbei selbstverständlich anstatt des Sechskants 33 auch Bohrungen 34, wie sie bei dem Ausführungsbeispiel gemäß Figur 2,8 und 9 vorgesehen sind, ausgebildet sein.

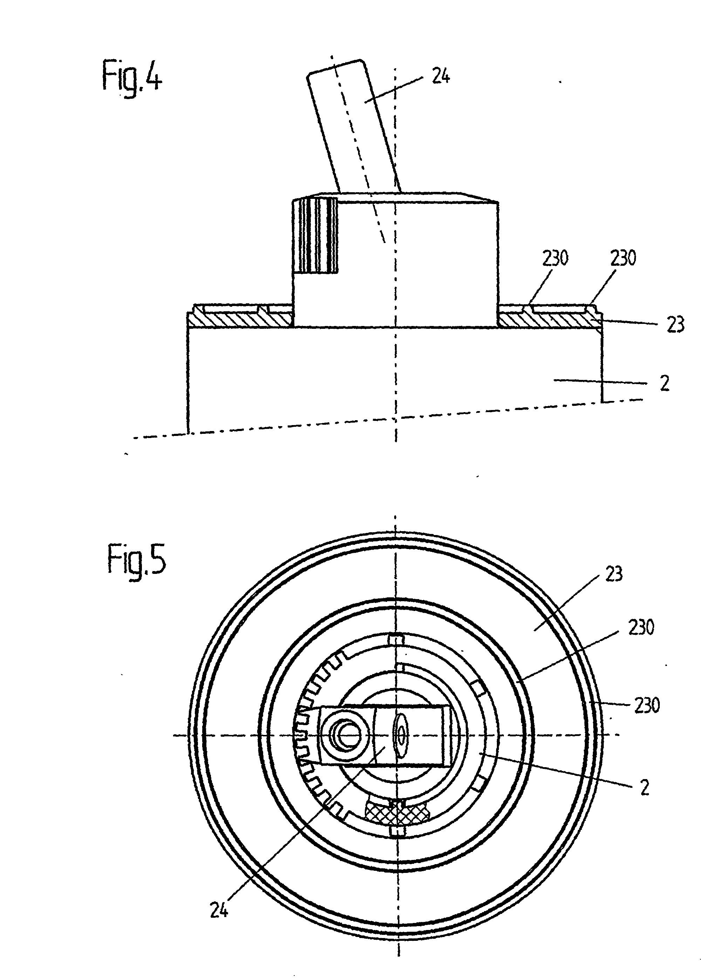

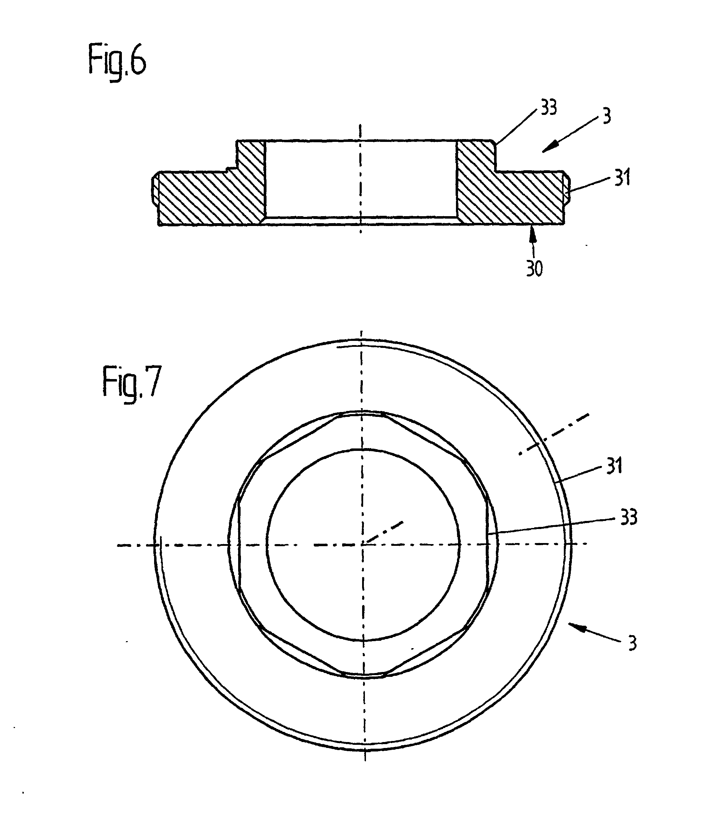

Bei Ventilkartuschen 2, insbesondere bei Ventilkartuschen, die einen relativ großen Durchmesser aufweisen, kann an der nacharbeitbaren Stirnfläche eine separate, auf die Ventilkartusche 2 aufsteckbare Scheibe 23 vorgesehen werden, wie es aus Figur 4 und 5 ersichtlich ist. Hierbei kann die Scheibe 23 eine oder mehrere umlaufende Rippen 230 aufweisen. Bei dem in Figur 4 bis 7 dargestellten Ausführungsbeispiel weist die Scheibe 23 zwei konzentrisch umlaufende Rippen 230 auf. Zur sicheren Fixierung der Ventilkartusche 2 ist dann eine im Durchmesser entsprechend groß ausgebildete Gewinderingmutter 3, wie sie in Figur 6 und 7 dargestellt ist, vorzusehen.

Neben dem Abschmelzvorgang der Rippen 230 bei der Nacharbeit auf ein bestimmtes Längenmaß der Ventilkartusche 2 kann alternativ auch die Anpassung des Längenmaß durch eine abschließende Zerspanung im Bereich der Stirnseite bzw. der Rippen 230 erfolgen.
In den beschriebenen Ausführungsbeispielen sind Eingriffmischventile dargestellt. Selbstverständlich kann in gleicher Weise die Ventilkartuschenanordnung für ein Mengenregulierventil oder ein Umstellventil erfolgen.

## Patentansprüche

1. Ventil, insbesondere Eingriffmischventil, enthaltend einen Armaturenkörper (1) und eine als Baueinheit ausgebildete mit dem Armaturenkörper verbindbare Ventilkartusche (2) mit wenigstens zwei aufeinanderliegenden, zueinander verschiebbaren Scheiben als Ventilorgan, wobei wenigstens eine der Scheiben eine o-der mehrere Durchtrittsöffnungen aufweist und die Scheiben zusammen mit den zugehörigen Dicht- und Gleitelementen in einem aus einem Boden (21) oder einer ortsfest gehaltenen Scheibe und einer Hülse (20) gebildeten, eine Öffnung für ein Ventilstellglied und Zu- und Abflussöffnungen enthaltenden Gehäuse angeordnet sind, wobei die Hülse (20) mit einer zu den Anschlussdichtungen (22) im Boden (21) oder an der ortsfest gehaltenen Scheibe abgekehrten, nacharbeitbaren Stirnseite versehen ist, **dadurch gekennzeichnet, dass** im Armaturenkörper (1) eine Aufnahmekammer (10) für die Ventilkartusche (2) ausgebildet ist, in oder an deren Öffnung (100) eine Gewinderingmutter (3) bis zur Anlage auf einer Kammerschulter (101) ein- oder aufdrehbar ist, wobei in der Montagestellung eine Stirnfläche (30) der Gewinderingmutter (3) sowohl an der Kammerschulter (101) als auch an der nachgearbeiteten Stirnseite der Ventilkartusche (2) anliegt, und der Abstand (11) der Auflagefläche der Kammerschulter (101) zur Auflagefläche (102) der Anschlussdichtungen (22) im Armaturenkörper (1) so bemessen ist, dass die erforderliche Vorspannung der Ventilelemente erfolgt.

2. Ventil nach Anspruch 1, **dadurch gekennzeichnet, dass** die Gewinderingmutter (3) mit einem am Außenmantel ausgebildeten Gewinde (31) in ein entsprechendes Gewinde in der Aufnahmekammer (10) eindrehbar ist.

3. Ventil nach Anspruch 1, **dadurch gekennzeichnet, dass** die Gewinderingmutter (3) mit einem im Durchmesser erweiterten Ansatz (32) versehen ist, in dessen Innenwandung ein Gewinde (31) ausgebildet ist, welches auf ein entsprechendes Gewinde am Außenmantel des Armaturenkörpers (1) aufdrehbar ist, wobei im Anschluss an den Ansatz (32) die Stirnfläche (30) für die Anlage an der Kammerschulter (101) am Armaturenkörper (1) und der Stirnfläche der Ventilkartusche (2) vorgesehen ist.

4. Ventil nach Anspruch 2 oder 3, **dadurch gekennzeichnet, dass** an der von der nachgearbeiteten Stirnseite der Ventilkartusche (2) abgekehrte Stirnseite der Gewinderingmutter (3) ein Polygon, vorzugsweise ein Sechskant (33), für den Ansatz eines Drehwerkzeugs vorgesehen ist.

5. Ventil nach Anspruch 2 oder 3, **dadurch gekennzeichnet, dass** in der Gewinderingmutter (3) auf einem Lochkreis Bohrungen (34) für den Ansatz eines Drehwerkzeugs ausgebildet sind.

6. Ventil nach wenigstens einem der Ansprüche 1 bis 5, **dadurch gekennzeichnet, *dass*** die Ventilkartusche (2) an der der Gewinderingmutter (3) zugekehrten Stirnseite eine aufsteckbare Scheibe (23) trägt, an der die Nacharbeit zur Längenanpassung erfolgt.

7. Ventil nach wenigstens einem der Ansprüche 1 bis 6, **dadurch gekennzeichnet, dass** zur Nacharbeit an der Stirnseite der Ventilkartusche (2) oder der Scheibe (23) ein oder mehrere als Ringe ausgebildete Rippen (230) angeformt sind.

8. Ventil nach Anspruch 7, **dadurch gekennzeichnet, dass** zur Längenanpassung die Rippen (230) entsprechend abgeschmolzen werden.

9. Ventil nach Anspruch 7, **dadurch gekennzeichnet, dass** zur Längenanpassung die Rippen (230) einer zerspanenden Bearbeitung unterzogen werden.

10. Ventil nach wenigstens einem der Ansprüche 1 bis 9, **dadurch gekennzeichnet, dass** zwischen dem Boden (21) der Ventilkartusche (2) und dem Boden der Aufnahmekammer (10) ein Spiel von 0,0 mm bis 0,6 mm, vorzugsweise von 0,05 mm bis 0,2 mm, vorgesehen ist.

## Claims

1. Valve, especially a single lever mixing valve, containing a fitting body (1) and a valve cartridge (2) in the form of a modular unit connectable with the fitting body and having at least two superimposed discs displaceable relative to one another as valve means, at least one of the discs having one or more through-openings and the discs, together with the associated sealing and sliding elements, being arranged in a housing formed from a base (21) or a fixedly retained disc and from a sleeve (20) and having an opening for a valve-actuating member and inlet and outlet openings, the sleeve (20) being provided with a trimmable end face remote from the connection seals (22) in the base (21) or on the fixedly retained disc, **characterised in that** in the fitting body (1) a receiving space (10) for the valve cartridge (2) is formed, into or to the opening (100) of which receiving space a threaded annular nut (3) can be screwed until it engages with a shoulder (101) of the receiving space, wherein, in the mounted position, the end face (30) of the threaded annular nut (3) bears both against the receiving space shoulder (101) and against the trimmed end face of the valve cartridge (2), and the spacing (11) between the bearing surface of the receiving space shoulder (101) and the bearing surface (102) of the connection seals (22) in the fitting body (1) is dimensioned such that the valve elements are biased to the required extent.

2. Valve according to claim 1, **characterised in that** the threaded annular nut (3) is screwable with a thread (31) formed on its outer surface into a corresponding thread in the receiving space (10).

3. Valve according to claim 1, **characterised in that** the threaded annular nut (3) is provided with an extension (32) of enlarged diameter, in the inner wall of which is formed a thread (31) screwable onto a corresponding thread on the outer surface of the fitting body (1), wherein the end face (30) for engagement with the receiving space shoulder (101) on the fitting body (1) and with the end face of the valve cartridge (2) is provided adjoining the extension (32).

4. Valve according to claim 2 or 3, **characterised in that** on the end face of the threaded annular nut (3) remote from the trimmed end face of the valve cartridge (2) there is provided a polygon, preferably a hexagon (33), for the placement of a turning tool.

5. Valve according to claim 2 or 3, **characterised in that** bores (34) for the placement of a turning tool are formed in the threaded annular nut (3) on a pitch circle.

6. Valve according to at least one of claims 1 to 5, **characterised in that** on the end face facing the threaded annular nut (3) the valve cartridge (2) carries a push-on disc (23), which is trimmed for length adaptation.

7. Valve according to at least one of claims 1 to 6, **characterised in that**, for trimming, one or more ribs (230) in the form of rings are moulded onto the end face of the valve cartridge (2) or the disc (23).

8. Valve according to claim 7, **characterised in that** for length adaptation the ribs (230) are suitably melted away.

9. Valve according to claim 7, **characterised in that** for length adaptation the ribs (230) are subjected to a material-removing finishing operation.

10. Valve according to at least one of claims 1 to 9, **characterised in that** between the base (21) of the valve cartridge (2) and the base of the receiving space (10) a clearance of 0.0 mm to 0.6 mm, preferably from 0.05 mm to 0.2 mm, is provided.

## Revendications

1. Vanne, en particulier vanne mélangeuse à poignée, comportant un corps (1) de robinet et une cartouche (2) de vanne pouvant se relier au corps de robinet et constituée en tant que module, comprenant comme organe de vanne, au moins deux plaques reposant l'une sur l'autre, coulissantes l'une par rapport à l'autre, dont au moins une des plaques présente une ou plusieurs ouvertures de passage, les plaques, avec les éléments d'étanchéité et de glissement correspondants étant disposées dans un boîtier, formé d'un fond (21) ou d'une rondelle maintenue en position et d'une douille (20), le boîtier contenant une ouverture pour un organe de réglage de vanne et des ouvertures d'arrivées et d'écoule-ment, et la cheville (20) étant pourvue d'un côté frontal, pouvant subir un travail de finition, détourné des joints (22) de raccordement dans le fond (21) ou sur la rondelle maintenue en position,
**caractérisé en ce que**
dans le corps (1) de robinet est formée une chambre (10) de réception pour la cartouche (2), dans ou sur l'ouverture (100) de laquelle un écrou (3) fileté peut être vissé à l'intérieur d'elle ou sur elle jusqu'à reposer sur un épaulement (101) de chambre, avec, en position de montage, une surface (30) frontale de l'écrou (3) fileté qui repose aussi bien contre l'épaulement (101) de chambre que contre le côté frontal retravaillé de la cartouche (2), et l'écartement (11) de la surface d'application de l'épaulement (101) de chambre par rapport à la surface (102) d'application des joints (22) de raccordement dans le corps (1) est dimensionné de manière à assurer la contrainte préalable nécessaire des éléments de vanne.

2. Vanne selon la revendication 1,
**caractérisée en ce que**
l'écrou (3) fileté peut se visser par un filetage (31) formé sur son enveloppe extérieure dans un filetage correspondant dans la chambre (10) de réception.

3. Vanne selon la revendication 1,
**caractérisée en ce que**
l'écrou (3) fileté est pourvu d'un prolongement (32) de diamètre augmenté, dont la paroi intérieure comporte un filetage (31) qui peut se visser sur un filetage correspondant de l'enveloppe extérieure du corps (1), le branchement sur le prolongement (32) étant prévu avec la face (30) frontale pour l'application sur l'épaulement (101) de chambre au corps (1) et sur la face frontale de la cartouche (2) de vanne.

4. Vanne selon la revendication 2 ou 3,
**caractérisée en ce que**
sur la face frontale de l'écrou (3) fileté détournée de la face frontale retravaillée de la cartouche (2) de vanne, un polygone, de préférence, un six pans (33), est prévu pour la mise en oeuvre d'un outil de mise en rotation.

5. Vanne selon la revendication 2 ou 3,
**caractérisée en ce que**
l'écrou (3) fileté comporte sur un cercle de trous, des perçages (34) pour la mise en oeuvre d'un outil de mise en rotation.

6. Vanne selon l'une au moins des revendications 1 à 5,
**caractérisée en ce que**
la face frontale de la cartouche (2) de vanne dirigée vers l'écrou (3) fileté porte une rondelle (23) enfichable sur laquelle on effectue la finition pour ajuster la longueur.

7. Vanne selon au moins l'une quelconque des revendications 1 à 6,
**caractérisée en ce que**
pour la finition, une ou plusieurs nervures (230) en forme d'anneau sont rapportées par formage sur la face frontale de la cartouche (2) ou de la rondelle (23).

8. Vanne selon la revendication 7,
**caractérisée en ce que**
pour l'ajustement de la longueur, les nervures (230) sont enlevées par fusion de manière correspondante.

9. Vanne selon la revendication 7,
**caractérisée en ce que**
pour l'ajustement de la longueur, les nervures (230) sont soumises à un traitement par enlèvement de copeaux.

10. Vanne selon au moins l'une quelconque des revendications 1 à 9,
**caractérisée en ce que**
entre le fond (21) de la cartouche (2) et le fond de la chambre (10) de réception, on prévoit un jeu de 0,0 mm à 0,6 mm, de préférence, de 0,05 mm à 0,2 mm.
